# EUROPEAN PATENT APPLICATION

(11) **EP 4 607 759 A1**
(43) Date of publication of application: **27.08.2025**
(21) Application number: 23878873.1
(22) Date of filing: 13.09.2023
(51) Int. Cl.: H02K 1/20, H02K 9/19, H02K 3/24, H02K 3/28, H02K 16/02

(54) **AXIAL FLUX MOTOR, STATOR COOLING STRUCTURE, AND MANUFACTURING METHOD**

(30) Priority: 21.10.2022 CN 202211299359; 21.10.2022 CN 202211299358; 21.10.2022 CN 202211299360
(71) Applicant: Shanghai Pangood Power Technology Co., Ltd., Shanghai 201615 (CN)
(72) Inventor: XU, Dianyou, Shanghai 201615 (CN); TANG, Lei, Shanghai 201615 (CN); ZHANG, Guangquan, Shanghai 201615 (CN); CHEN, Jinhua, Shanghai 201615 (CN)
(74) Representative: advotec.
(86) International application number: PCT/CN2023/118579
(87) International publication number: WO 2024/082879

(57) **Abstract**

The present invention provides an axial flux motor, a stator cooling structure, and a manufacturing method. The stator cooling structure comprises: a housing comprising two annular plates arranged in the radial direction; a spraying ring located between the two annular plates and connected to one of the annular plates, wherein a spraying ring oil spraying path is formed between the spraying ring and the connected annular plate, a stator cavity is formed between the spraying ring and the other annular plate, a plurality of spraying holes are formed on the spraying ring, and the spraying holes communicate the stator cavity with the spraying ring oil spraying path; and a plurality of iron core windings fixed in the stator cavity at intervals in the circumferential direction, a connection gap being formed at the joint of the spraying ring and the annular plate. The spraying ring oil spraying path is used for introducing a cooling medium, and the cooling medium is sprayed to the iron core windings in the stator cavity by means of the spraying holes on the spraying ring to achieve the cooling effect; the spraying ring oil spraying path is formed by connecting the spraying ring and the annular plate, thereby effectively reducing the machining difficulty, and ensuring the structural strength and the supporting capacity of the housing.

## Description

### FIELD

The present application relates to the technical field of axial flux motors, and in particular to an axial flux motor, a stator cooling structure and a manufacturing method.

### BACKGROUND

An axial flux motor, also known as a pancake motor, has advantages of small size, high torque density, high power density and high efficiency, and is widely used in electric vehicles, general industry, and etc.. The axial flux motor includes a housing, a stator and a rotor, and the stator and the rotor are arranged inside the housing. The motor may generate various losses during the operating process, which may cause motor to generate heat. A stator core and a coil winding are main heat-generating elements of the motor. In order to improve the operating efficiency of the motor, it is necessary to design a cooling structure for the motor. At present, the cooling structure may be designed in a way where a channel is opened inside the housing, and cooling medium is introduced into the housing to exchange heat with the heat-generating elements, so as to achieve a cooling effect.

The way of opening a channel inside the housing, however, requires processing for the housing, which not only increases the processing difficulty, but also reduces the supporting capacity and strength of the whole housing. In addition, in order to meet the needs of opening the channel inside the housing, a size of the housing needs to be further increased, which weakens the advantage of small size of the axial flux motor and reduces the adaptability of the mounting environment.

### SUMMARY

An axial flux motor, a stator cooling structure and a manufacturing method are provided according to the present application to solve the above problems. An insulating oil spray ring can cooperate with a housing to form a spray ring oil spray circuit, thereby avoiding the drawback of reduced housing support capacity and strength caused by arranging the spray ring oil spray circuit inside the housing. Moreover, since the insulating oil spray ring is insulated and disposed between the housing and the windings, a distance between the housing and windings can be shortened, the insulation between the housing and the windings can be ensured, and also the overall volume can be reduced.

According to an object of the present application, a stator cooling structure is provided, including:
a housing, which includes two enclosing plates arranged along a radial direction;
at least one spray ring, where the spray ring is located between two enclosing plates and is connected with one enclosing plate, a spray ring oil spray circuit is formed between the spray ring and the enclosing plate, a stator cavity is formed between the spray ring and the other enclosing plate, and multiple spray holes are formed in the spray ring, which communicate the stator cavity and the spray ring oil spray circuit;
multiple iron core windings fixed in the stator cavity and spaced apart along a circumferential direction; and
a splicing gap formed at a joint of the spray ring and the enclosing plate.

As a preferred embodiment, the two enclosing plates include an inner enclosing plate and an outer enclosing plate, and the outer enclosing plate has a housing inlet and a housing outlet.

As a preferred embodiment, a spray ring oil spray circuit is formed between the spray ring and the outer enclosing plate, and the spray ring oil spray circuit is communicated with the housing inlet;
an iron core outer ring oil gap is formed between the spray ring and the iron core winding, and the spray hole is communicated with the iron core outer ring oil gap and the spray ring oil spray circuit;
an inner ring oil circuit is formed between the iron core winding and the inner enclosing plate;
an inter-winding inward oil circuit is formed between two iron core windings facing and adjacent to the spray ring, and the inter-winding inward oil circuit communicates the iron core outer ring oil gap and the inner ring oil circuit;
the spray ring has the spray ring oil outlet, the spray ring oil outlet right faces and communicates with the housing outlet, and the spray ring oil outlet and the iron core outer ring oil gap are arranged and spaced apart in the circumferential direction; and
an inter-winding outward oil circuit is formed between two iron core windings facing and adjacent to the spray ring oil outlet, and the inter-winding outward oil circuit communicates the spray ring oil outlet and the inner ring oil circuit.

As a preferred embodiment, the spray ring oil outlet and the spray ring oil spray circuit are blocked by multiple barrier members, which are sandwiched between the iron core winding and the outer enclosing plate, and one of the barrier members is blocked between the housing inlet and the housing outlet.

As a preferred embodiment, the spray ring is connected to an outer ring of the inner enclosing plate to form the spray ring oil spray circuit between the spray ring and the inner enclosing plate;
the outer enclosing plate and the spray ring are separated from each other by a barrier member and form an inward oil circuit and an outward oil circuit arranged and spaced apart in the circumferential direction, the housing inlet is communicated with the inward oil circuit, and the housing outlet is communicated with the outward oil circuit;
the spray ring has a spray ring oil inlet, the inward oil circuit is communicated with the spray ring oil spray circuit through the spray ring oil inlet, and an inter-winding inward oil gap is formed between two adjacent iron core windings and is located in the inward oil circuit;
the spray ring oil spray circuit is communicated with the outward oil circuit through multiple spray holes, and a winding inner ring outward oil gap is formed between two adjacent iron core windings and is located in the outward oil circuit.

As a preferred embodiment, the inward oil circuit further includes a winding outer ring inward oil gap and a winding inner ring inward oil gap, and, the spray ring oil spray circuit, the winding inner ring inward oil gap and the winding outer ring inward oil gap are arranged radially from inside to outside, multiple inter-winding inward oil gaps are communicated between the winding outer ring inward oil gap and the winding inner ring inward oil gap, the winding inner ring inward oil gap is communicated with the spray ring oil spray circuit through the spray ring oil inlet, and the housing inlet communicates with the winding outer ring inward oil gap, and
the outward oil circuit further includes a winding outer ring outward oil gap and a winding inner ring outward oil gap, where the spray ring oil spray circuit, the winding inner ring outward oil gap and the winding outer ring outward oil gap are arranged radially from inside to outside, multiple inter-winding outward oil gaps are communicated between the winding inner ring outward oil gap and the winding outer ring outward oil gap, the spray ring oil spray circuit is communicated with the winding inner ring outward oil gap through the spray holes, and the winding outer ring outward oil gap is communicated with the housing outlet.

As a preferred embodiment, the stator cooling structure further includes a collecting groove, and the collecting groove and the outward oil circuit are arranged in the circumferential direction and communicated end to end sequentially, and at least one axial end face of the outer enclosing plate is provided with the collecting groove.

As a preferred embodiment, the outer ring of the inner enclosing plate is provided with a flow diverter, and the flow diverter right faces the spray ring oil inlet.

As a preferred embodiment, the splicing gap is filled with glue.

As a preferred embodiment, the spray ring oil spray circuit includes at least one cooling groove, and a side of the spray ring connected with the enclosing plate is recessed to form the cooling groove, and/or a side of the enclosing plate connected with the spray ring is recessed to form the cooling groove.

As a preferred embodiment, the housing includes two bottom plates, the enclosing plate and axial ends of the iron core winding are respectively connected between the two bottom plates, and the spray ring is fixed to the two bottom plates.

As a preferred embodiment, the iron core winding includes an iron core and a coil, the bottom plate is provided with multiple positioning slots, and the positioning slots on the two bottom plates are in one-to-one correspondence. The iron cores are inserted into the corresponding positioning slots on the two bottom plates, and the coil mounted outside the outer periphery of the iron core is sandwiched between the two bottom plates.

As a preferred embodiment, the spray ring is made of insulating material, the enclosing plate is made of high-strength non-metal or high-strength metal material, and the bottom plate is made of non-metal material.

According to another object of the present application, an axial flux motor is further provided by the present application, which includes a stator cooling structure of the above embodiment, and further includes two rotors. The two rotors are respectively held at two axial sides of the stator cooling structure with air gaps.

According to another object of the present application, a method for manufacturing a stator cooling structure is further provided by the present application, which includes the following steps:
providing a spray ring, where the spray ring has multiple spray holes;
splicing the spray ring on an enclosing plate to form a spray ring oil spray circuit between the spray ring and the spliced enclosing plate, and forming a stator cavity between the spray ring and another enclosing plate; and
arranging multiple iron core windings in the stator cavity spaced apart in the circumferential direction.

Compared with the conventional technology, the technical solution has the following advantages.

The spray ring in conjunction with the housing form the spray ring oil spray circuit for introducing the cooling medium, and the cooling medium is sprayed on the iron core winding in the stator cavity through the spray holes in the spray ring to achieve the cooling effect. Compared with the way of processing the interior of the housing in the conventional technology, only the spray ring needs to be processed, which effectively reduces the processing difficulty and ensures the structural strength and supporting capacity of the housing.

The spray ring may be made of insulating material. By sandwiching the spray ring between the iron core winding and the enclosing plate, not only can the spray ring oil spray circuit be formed between the spray ring and the enclosing plate, but also the insulation between the iron core winding and the enclosing plate can be ensured. In addition, a distance between the iron core winding and the enclosing plate can be shortened, thus allowing the radial size of the whole to be reduced, and ensuring the adaptability of the mounting environment.

The present application will be further described with reference to the attached drawings and examples.

### BRIEF DESCRIPTION OF THE DRAWINGS

FIG. 1 is a cross-sectional view of a stator cooling structure according to a first embodiment of the present application;
FIG 2 is a schematic structural view of the stator cooling structure according to the first embodiment of the present application;
FIG. 3 is a schematic structural view of a spray ring in the stator cooling structure according to the first embodiment of the present application;
FIG. 4 is a schematic structural view of an outer enclosing plate in the stator cooling structure according to the first embodiment of the present application;
FIG. 5 is a cross-sectional view of a stator cooling structure according to a second embodiment of the present application;
FIG 6 a schematic structural view of the stator cooling structure according to the second embodiment of the present application;
FIG. 7 is a schematic structural view of a spray ring in the stator cooling structure according to the second embodiment of the present application;
FIG. 8 is a schematic structural view of an inner enclosing plate in the stator cooling structure according to the second embodiment of the present application;
FIG. 9 is a schematic structural view of an outer enclosing plate in the stator cooling structure according to the second embodiment of the present application;
FIG. 10 is a schematic view showing an assembly of a housing and a spray ring in the stator cooling structure according to the second embodiment of the present application;
FIG. 11 is a cross-sectional view of a stator cooling structure according to a third embodiment of the present application;
FIG. 12 is a cross-sectional view of a stator cooling structure according to a fourth embodiment of the present application.

### DETAILED DESCRIPTION OF THE EMBODIMENTS

The following description is used to disclose the present application and enable those skilled in the art to realize the present application. The preferred embodiments in the following description are only examples, and other obvious variations can occur to those skilled in the art. The basic principles of the present application defined in the following description can be applied to other embodiments, variations, improvements, equivalents and other technical solutions without departing from the spirit and scope of the present application.

### First embodiment

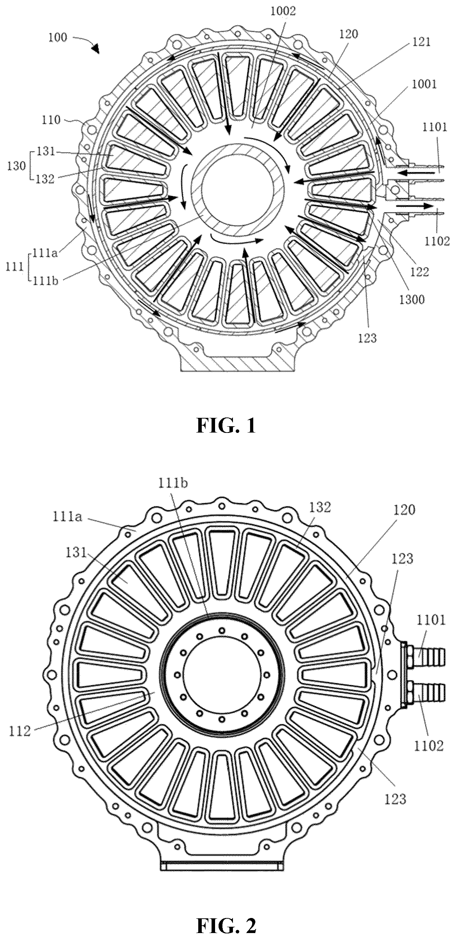

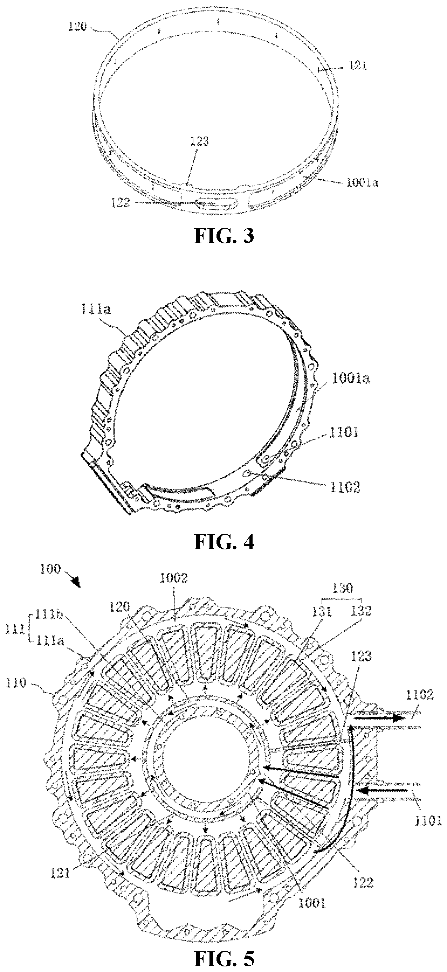

As shown in FIG. 1 and FIG. 5, a stator cooling structure 100 includes:
a housing 110, which includes two enclosing plates 111 arranged in a radial direction;
at least one spray ring 120, in which the spray ring 120 is located between two enclosing plates 111 and is connected with one of the two enclosing plates 111, a spray ring oil spray circuit 1001 is formed between the spray ring 120 and the enclosing plate 111 which is connected to the spray ring 120, a stator cavity 1002 is formed between the spray ring 120 and the other enclosing plate 111, and multiple spray holes 121 are formed in the spray ring 120, which is used to communicate the stator cavity 1002 and the spray ring oil spray circuit 1001;
multiple iron core windings 130 fixed in the stator cavity 1002 spaced apart in a circumferential direction.

The spray ring 120 can cooperate with the housing 110 to form the spray ring oil spray circuit 1001 for introducing cooling medium (including cooling oil or the like), and the cooling medium is sprayed on the multiple iron core windings 130 in the stator cavity 1002 through the spray holes 121 on the spray ring 120 to perform cooling. Compared with the way of processing the interior of the housing in the conventional technology, only the spray ring 120 needs to be processed, which effectively reduces the processing difficulty and ensures the structural strength and supporting capacity of the housing 110.

With reference to FIG. 1 and FIG. 5, a splicing gap is formed at a joint of the spray ring 120 and the enclosing plate 111, that is, the spray ring 120 and the enclosing plate 111 are spliced to form an integral piece. This avoids excessive processing of the enclosing plate 111 of the housing 110, which may otherwise affect the support capacity and strength of the housing 110. The splicing gap is filled with glue, that is, the spray ring 120 and the enclosing plate 111 may be bonded together through the glue.

In addition, it is necessary to keep a gap between the multiple iron core windings 130 and the enclosing plate 111 to ensure insulation between them and avoid short circuit. In this case, the spray ring 120 may be made of insulating material, such as a plastic spray ring. By sandwiching the spray ring 120 between the multiple iron core windings 130 and the enclosing plate 111, not only can the spray ring oil spray circuit 1001 be formed between the spray ring 120 and the enclosing plate 111, but also the insulation between the multiple iron core windings 130 and the enclosing plate 111 can be ensured. In addition, a distance between the multiple iron core windings 130 and the enclosing plate 111 can be shortened, thus allowing the radial size of the whole to be reduced, and ensuring the adaptability for the mounting environment.

As shown in FIG. 1 and FIG. 5, each iron core winding 130 includes an iron core 131 and a coil 132. The coil 132 is mounted outside an outer periphery of the iron core 131 and may be a copper coil. The coil 132 is adapted to the iron core 131 in shape, where the iron core 131 is trapezoidal in shape, an upper base of the iron core 131 is inward-oriented, and a lower base of the iron core 131 is outward-oriented. A stator groove 1300 is formed between two adjacent iron core windings 130 to allow the cooling medium to pass through. It should be noted that when the coil 132 is tightly wound around the outer periphery of the iron core 131, the cooling medium may pass between the coils 132 of two iron core windings 130. In addition, there may also be a gap between the coil 132 and the iron core 131, that is, the cooling medium can run through the coil 132 and the iron core 131 to be in contact with the coil 132 and the iron core 131 at the same time, so as to further enhance the cooling effect.

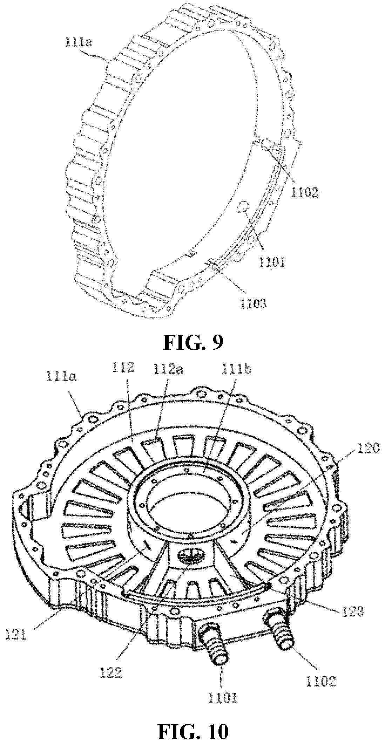

As shown in FIG. 2 and FIG. 10, the housing 110 includes two bottom plates 112, and the two enclosing plates 111 is connected between the two bottom plates 112 and fixed by bolts. The bolts may be arranged on the two enclosing plates 111 located at a radial inner side and a radial outer side to ensure a stable connection. One of the bottom plates 112 may be integrally connected with the two enclosing plates 111 by injection molding, and the other bottom plate 112 may be detachably connected with the two enclosing plates 111, so as to realize an arrangement of the iron core winding 130 and the spray ring 120, which may improve the sealing performance. In addition, a sealing ring may be provided between the bottom plate 112 and the two enclosing plates 111 to improve the sealing performance.

With reference to FIG. 10, each bottom plate 112 is provided with multiple positioning slots 112a, and the positioning slots 112a on the two bottom plates 112 are in one-to-one correspondence. The iron cores 131 are inserted into the corresponding positioning slots 112a on the two bottom plates 112, and the coil 132 mounted on the outer periphery of the iron core 131 is sandwiched between the two bottom plates 112.

The positioning slot 112a is adapted to the iron core 131 in shape, and they both are trapezoidal in shape. The iron core 131 may be fixed in the positioning slot 112a by glue to ensure the bonding strength, thereby improving the stability of the lifting structure. Moreover, through the positioning slot 112a, the iron core winding 130 may be positioned and mounted on the bottom plate 112, so as to improve the mounting efficiency and ensure the mounting position.

Similarly, the spray ring 120 is fixed between the two bottom plates 112, and the spray ring 120 and the bottom plates 112 may be fixed by glue to separate the stator cavity 1002 from the spray ring oil spray circuit 1001.

The two enclosing plates 111 may be made of high-strength metal or high-strength nonmetallic material, where the high-strength metal material includes alloy steel, aluminum alloy and the like, and the high-strength nonmetallic material includes glass fiber composite, carbon fiber composite or plastic, such as PPS, PPA, PA, PEEK and the like, so as to ensure the manufacturing strength of the two enclosing plates 111. The bottom plate 112 is made of nonmetallic materials, such as glass fiber composite, carbon fiber composite or plastic. The bottom plate 112 is of a relatively small thickness, which ensures that both axial ends of the iron core winding 130 may be respectively matched with the air gaps of two rotors, and then the axial flux motor with a single stator and two rotors is assembled.

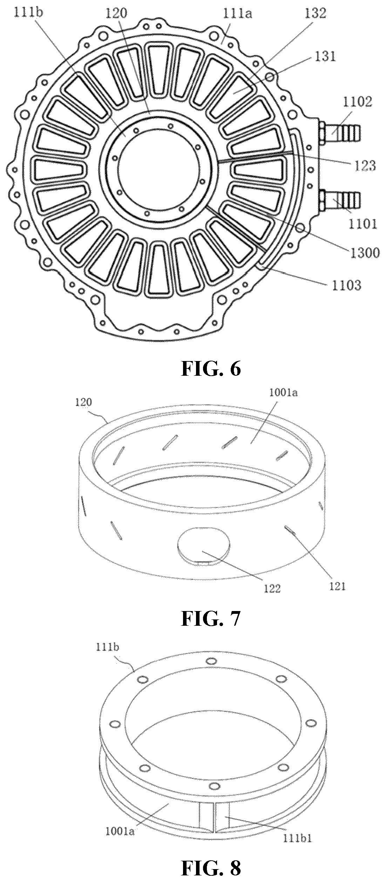

As shown in FIG. 2 and FIG. 6, the housing 110 is in a shape of a pancake as a whole, that is, the two enclosing plates 111 are of an annular shape, and the spray ring 120 is also in an annular shape. Also, the shape of the spray ring 120 may be adjusted with the change of the shape of the housing 110.

As shown in FIG. 1 and FIG. 5, the two enclosing plates 111 includes an outer enclosing plate 111a and an inner enclosing plate 111b, and the spray ring 120 has different shapes when matching with the outer enclosing plate 111a or the inner enclosing plate 111b.

As shown in FIG. 1 and FIG. 2, the spray ring 120 is connected to an inner side of the outer enclosing plate 111a to form the spray ring oil spray circuit 1001 between the spray ring 120 and the outer enclosing plate 111a, and to form the stator cavity 1002 at an inner side of the spray ring 120. Multiple spray holes 121 pass through the spray ring 120, and can communicate with the spray ring oil spray circuit 1001 and the stator cavity 1002. The multiple iron core windings are fixed and spaced apart in the stator cavity 1002 in the circumferential direction.

The cooling medium in the spray ring oil spray circuit 1001 is sprayed to the iron core winding 130 located in the stator cavity 1002 through the spray holes 121 to take away heat from the iron core winding 130.

As shown in FIG. 1 to FIG. 3 and FIG. 5, the outer enclosing plate 111a is provided with a housing inlet 1101 and a housing outlet 1102, and the housing inlet 1101 can communicate with the spray ring oil spray circuit 1001 and the housing outlet 1102 can communicate with the stator cavity 1002. In this way, the cooling medium is first introduced into the spray ring oil spray circuit 1001 through the housing inlet 1101 and then sprayed into the stator cavity 1002 through the spray holes 121 on the spray ring 120, so as to cool the iron core winding 130 in the stator cavity 1002, and after heat exchange in the stator cavity 1002, the cooling medium is discharged from the housing outlet 1102.

As shown in FIG. 1 and FIG. 3, the spray ring 120 is provided with an opening 122. The opening 122 and the spray ring oil spray circuit 1001 are arranged and spaced apart along the circumferential direction of the spray ring 120, and the opening 122 faces the housing outlet 1102. The opening 122 can communicate with the stator cavity 1002 and the housing outlet 1102, that is, the cooling medium after heat exchange in the stator cavity 1002 flows from the opening 122 to the housing outlet 1102 and is discharged from the housing outlet 1102, as shown in FIG. 1.

Further, the spray ring 120 is provided with two barrier members 123. The two barrier members 123 are arranged at two sides of the opening 122 in the circumferential direction respectively, separating from the spray ring oil spray circuit 1001. The barrier members 123 is sandwiched between the iron core winding 130 and the outer enclosing plate 111a, and one of the barrier members 123 is blocked between the housing inlet 1101 and the housing outlet 1102. This prevents the cooling medium introduced from the housing inlet 1101 from being directly discharged from the housing outlet 1102 clockwise, and prevents the cooling medium after heat exchange from being discharged from the housing inlet 1101.

As shown in FIG. 1, the cooling medium introduced from the housing inlet 1101 flows counterclockwise in the spray ring oil spray circuit 1001 under the blocking of the barrier member 123, and the cooling medium in the spray ring oil spray circuit 1001 is sprayed into the stator cavity 1002 through the multiple spray holes 121. The cooling medium can run between two adjacent iron core windings 130 and flows radially from outside to inside of the iron core windings 130 to converge, and run through the gaps between the opening 122 and the iron core 131, until it is discharged from the housing outlet 1102.

As shown in FIG. 1 and FIG. 2, the housing 110 further includes the inner enclosing plate 111b connected between the two bottom plates 112, and a center of the inner enclosing plate 111b is connected with a rotating shaft. When the cooling medium flows to the radial inner side of the iron core winding 130, it follows the outer periphery of the inner peripheral plate 111b until it runs through the gaps between the iron cores 131 facing the opening 122.

With continued reference to FIG. 1, the circumferential size of the opening 122 is approximately equal to a distance between the two barrier members 123. At present, each of the barrier members 123 abuts against one iron core winding 130, and one iron core winding 130 is arranged between two adjacent barrier members 123. Since the circumferential size of the opening 122 and the distance between the two barrier members 123 may define the size of the cooling medium discharge channel, the circumferential size of the opening 122 and the distance between the two barrier members 123 can be adjusted to adjust the size of the cooling medium discharge channel, so as to regulate the flow resistance.

As shown in FIG. 1 and FIG. 3, the multiple spray holes 121 are arranged and spaced apart along the circumference of the spray ring 120, so that the cooling medium can be uniformly sprayed into the stator cavity 1002 from all circumferential angles, allowing each of the iron core windings 130 to be in contact with the cooling medium and thus ensuring the cooling effect.

With reference to FIG. 1, the spray hole 121 is located on a center line of the iron core winding 130, so that the cooling medium sprayed from the spray hole 121 can be directly sprayed to the radial outer side of the iron core winding 130, and then run between two adjacent iron core windings 130 and flows to the radial inner side of the iron core winding 130. In this way, the radial outer side of the iron core winding 130 may also be in contact with the cooling medium, and the outer periphery of each of the iron core windings 130 may be ensured to be in contact with the cooling medium, thus improving the cooling effect. When the spray ring 120 abuts against the iron core windings 130, the spray hole 121 may correspond to the gap between two iron core windings 130.

One iron core winding 130 is arranged between two adjacent spray holes 121, and the spray holes 121 are of a linear shape, which is not limited to this. By adjusting the size, shape and number of the spray holes 121, the oil output amount can be regulated to ensure the uniform cooling of the coil 132 of the iron core winding 130.

As shown in FIG. 3 and FIG. 4, the spray ring oil spray circuit 1001 includes at least one cooling groove 1001a. A side of the spray ring 120 connected with the outer enclosing plate 111a is recessed to form the cooling groove 1001a, and/or a side of the outer enclosing plate 111a connected with the spray ring 120 is recessed to form the cooling groove 1001a.

The cooling groove 1001a may only be formed on the spray ring 120, so that only the cooling groove 1001a needs to be machined, which reduces the machining difficulty and ensures the strength and supporting capacity of the housing 110. In this case, the spray hole 121 is located at a bottom of the cooling groove 1001a of the spray ring 120.

Certainly, the cooling groove 1001a may be formed on the outer enclosing plate 111a of the housing 110. Since only the inner side wall of the outer enclosing plate 111a needs to be processed, it reduces the processing difficulty, compared to processing the interior of the housing.

When the outer enclosing plate 111a and the spray ring 120 are respectively provided with cooling grooves 1001a, the volume of the cooling grooves 1001a can be increased. In this case, the cooling grooves 1001a on the outer enclosing plate 111a and the spray ring 120 are arranged opposite and in communication to each other, and the spray holes 121 are located at the bottom of the cooling grooves 1001a of the spray ring 120.

It should be noted that a splicing surface where the spray ring 120 splices with the enclosing plate 111, as well as a splicing surface where the enclosing plate 111 splices with the spray ring 120, are splicing gaps except at the location of the cooling groove 1001a. Additionally, the splicing gaps are coated with glue.

As shown in FIG. 1 and FIG. 3, the circumferential size of the cooling groove 1001a is much larger than that of the opening 122.

Since the cooling medium in the spray ring oil spray circuit 1001 needs to be sprayed into the stator cavity 1002 through the spray holes 121 on the spray ring 120, there is no high requirement for the sealing performance between the spray ring 120 and the outer enclosing plate 111a when they abut against each other. Therefore, it is sufficient to fix both axial ends of the spray ring 120 directly to the two bottom plates 112. In order to ensure the strength of the spray ring 120, multiple reinforcing ribs may be arranged on the side of the spray ring 120 facing the iron core winding 130 to prevent the spray ring 120 from being deformed. The reinforcing ribs are staggered from the spray holes 121, and the reinforcing ribs abut on the iron core winding 130.

### Second embodiment

As shown in FIG. 5 to FIG. 10, the stator cooling structure 100 of the second embodiment differs from the first embodiment in that a spray ring oil spray circuit 1001 is formed between the spray ring 120 and the inner enclosing plate 111b, and a stator cavity 1002 is formed between the spray ring 120 and the outer enclosing plate 111a.

The cooling medium in the spray ring oil spray circuit 1001 is sprayed to the iron core winding 130 located in the stator cavity 1002 through the spray holes 121 on the spray ring 120 to cool the iron core winding 130.

As shown in FIG. 5 and FIG. 6, the outer enclosing plate 111a is provided with a housing inlet 1101 and a housing outlet 1102, and the housing inlet 1101 can communicate with the spray ring oil spray circuit 1001 and the housing outlet 1102 can communicate with the stator cavity 1002.

With reference to FIG. 5 and FIG. 10, the two barrier members 123 are connected between the spray ring 120 and the outer enclosing plate 111a. The two barrier members 123 pass between two adjacent iron core windings 130. The opening 122 and the housing inlet 1101 are respectively located between the two barrier members 123, and one of the barrier members 123 is blocked between the housing inlet 1101 and the housing outlet 1102.

In this way, the cooling medium introduced from the housing inlet 1101 first passes between the two barrier members 123, and flows into the spray ring oil spray circuit 1001 from the opening 122, and then is sprayed from the spray holes 121 on the spray ring 120 to the iron core winding 130 located in the stator cavity 1002, and finally is discharged from the housing outlet 1102. One of the barrier members 123 is blocked between the housing inlet 1101 and the housing outlet 1102, so as to prevent the cooling medium introduced from the housing inlet 1101 from being directly discharged from the housing outlet 1102, instead of first entering the spray ring oil spray circuit 1001 and then being sprayed into the stator cavity 1002 through the spray holes 121. This ensures that the cooling medium can be uniformly sprayed to each of the iron core windings 130, thus improving the cooling effect.

As shown in FIG. 5, FIG. 7 and FIG. 8, the spray ring oil spray circuit 1001 includes at least one cooling groove 1001a. A side of the spray ring 120 connected with the inner enclosing plate 111b is recessed to form the cooling groove 1001a, and/or a side of the inner enclosing plate 111b connected with the spray ring 120 is recessed to form the cooling groove 1001a.

As shown in FIG. 5 and FIG. 8, a flow diverter 111b1 is arranged on the outer side of the inner enclosing plate 111b, and the flow diverter 111b1 right faces the opening 122. The flow diverter 111b1 may be triangular in shape, with its vertex angle directly facing the opening 122, so that the cooling medium introduced from the opening 122 is divided by the flow diverter 111b1 and flows into the spray ring oil spray circuit 1001 from both sides of the flow diverter 111b1, ensuring that each of the spray holes 121 can uniformly spray the cooling medium.

With reference to FIG. 5, the circumferential size of the opening 122 is approximately equal to the distance between the two barrier members 123. At present, three iron core windings 130 are arranged between the two adjacent barrier members 123. The circumferential size of the opening 122 and the distance between the two barrier members 123 may define the size of the cooling medium introduction channel, so the circumferential size of the opening 122 and the distance between the two barrier members 123 can be adjusted to vary the size of the cooling medium introduction channel to regulate the flow resistance.

With continued reference to FIG. 5, multiple spray holes 121 are distributed and spaced apart along the circumference of the spray ring 120, so that the cooling medium can be uniformly sprayed into the stator cavity 1002 from all circumferential angles, allowing each of the iron core windings 130 to be in contact with the cooling medium and thus ensure the cooling effect.

The spray hole 121 is located on the center line of the iron core winding 130, so that the cooling medium sprayed from the spray hole 121 can be directly sprayed to the radial inner side of the iron core winding 130, and then run between two adjacent iron core windings 130 and flow to the radial outer side of the iron core winding 130. In this way, the radial inner side and the radial outer side of the iron core winding 130 are both in contact with the cooling medium, and the outer periphery of each of the iron core windings 130 may be ensured to be in contact with the cooling medium, thereby improving the cooling effect.

One iron core winding 130 is arranged between two adjacent spray holes 121, and the spray holes 121 are arranged in a straight and oblique manner, as show in FIG. 7, which is not limited to this. By adjusting the size, shape and number of the spray holes 121, the oil output amount can be regulated to ensure the uniform cooling of the coils 132 of the iron core winding 130.

As shown in FIG. 5, when the cooling medium runs between two adjacent iron core windings 130 and flows to the radial outer side, the cooling medium is discharged from the housing outlet 1102 in the circumferential direction. Since the two barrier members 123 are arranged in the stator cavity 1002, the cooling medium below the two barrier members 123 needs to move clockwise until it is discharged from the housing outlet 1102. The cooling medium is remained in contact with each of the iron core windings 130 during its flow, which significantly affects the heat exchange. To address this, a collecting groove 1103 is formed on the axial end face of the outer enclosing plate 111a, so as to directly lead the cooling medium below the barrier member 123 to the housing outlet 1102 and directly discharge it from the housing outlet 1102. This avoids the cooling medium that has already exchanged heat from being remained in contact with the iron core winding 130 and affecting the cooling effect.

Specifically, at least one axial end face of the outer enclosing plate 111a is provided with the collecting groove 1103, which is arranged along the circumferential direction of the outer enclosing plate 111a. The both ends of the collecting groove 1103 are located outside the two barrier members 123 and can communicate with the stator cavity 1002, as shown in FIG. 5 and FIG. 9. By defining the collecting grooves 1103 on both axial end faces of the outer enclosing plate 111a, the fluidity is enhanced, and the discharge efficiency of the cooling medium after heat exchange is further improved.

In summary, the spray ring 120 and the housing 110 are cooperated to form the spray ring oil spray circuit 1001 for introducing the cooling medium, and the cooling medium is sprayed on the iron core winding 130 in the stator cavity 1002 through the spray holes 121 in the spray ring 120 to achieve the cooling effect. Compared with the way of processing the interior of the housing in the conventional technology, only the spray ring 120 needs to be processed, which effectively reduces the processing difficulty and ensures the structural strength and supporting capacity of the housing 110. The spray ring 120 can abut against the outer enclosing plate 111a or the inner enclosing plate 111b of the housing 110, that is, the spray ring oil spray circuit 1001 can be formed radially inside or outside the iron core winding 130, which increases the design space. The spray ring 120 can be made of insulating material. By sandwiching the spray ring 120 between the iron core winding 130 and the enclosing plate 111, not only can the spray ring oil spray circuit 1001 be formed between the spray ring 120 and the enclosing plate 111, but also the insulation between the iron core winding 130 and the enclosing plate 111 can be ensured. Additionally, this design can shorten the distance between the iron core winding 130 and the enclosing plate 111, thereby reducing the overall radial size and ensuring adaptability to the mounting environment.

### Third embodiment

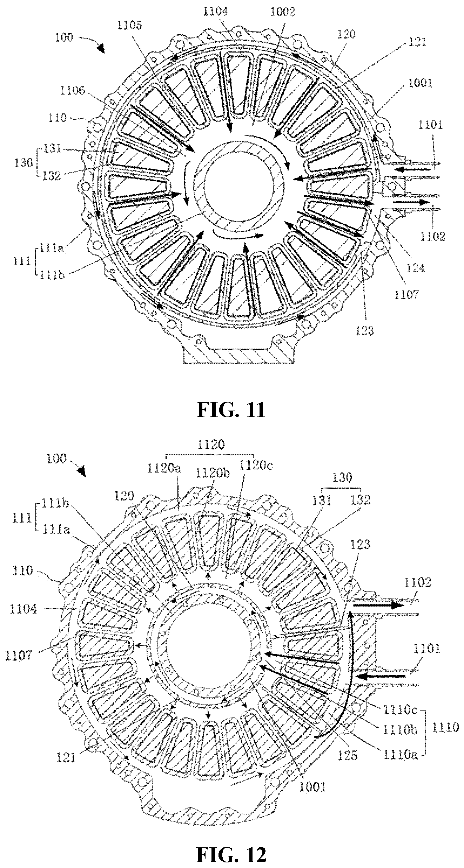

As shown in FIG. 11, the stator cooling structure 100 includes:
a housing inlet 1101, a spray ring oil spray circuit 1001, an iron core outer ring oil gap 1104, multiple inter-winding inward oil circuits 1105, an inner ring oil circuit 1106, multiple inter-winding outward oil circuits 1107, a spray ring oil outlet 124 and a housing outlet 1102;
the iron core outer ring oil gap 1104 is located at a radial outer side of the inner ring oil circuit 1106, and the multiple inter-winding inward oil circuits 1105 can communicate the iron core outer ring oil gap 1104 and the inner ring oil circuit 1106;
the spray ring oil outlet 124 is located at the radial outer side of the inner ring oil circuit 1106, the multiple inter-winding outward oil circuits 1107 can communicate the spray ring oil outlet 124 and the inner ring oil circuit 1106, the spray ring oil outlet 124 and the iron core outer ring oil gap 1104 are arranged and spaced apart in the circumferential direction;
the spray ring oil spray circuit 1001 is located at the radial outer side of the iron core outer ring oil gap 1104, the spray ring oil spray circuit 1001 can be communicated with the iron core outer ring oil gap 1104 through multiple spray holes 121, the spray ring oil spray circuit 1001 and the spray ring oil outlet 124 are arranged and spaced apart in the circumferential direction;
the housing inlet 1101 can be communicated with the spray ring oil spray circuit 1101, and the housing outlet 1102 can be communicated with the spray ring oil outlet 124.

The cooling medium (including cooling oil) can be introduced into the spray ring oil spray circuit 1001 from the housing inlet 1101 and evenly sprayed into the iron core outer ring oil gap 1104 through the circumferentially spaced spray holes 121, and then flow into the inner ring oil circuit 1106 from the multiple inter-winding inward oil circuits 1105. The cooling oil in the inner ring oil circuit 1106 flows to the spray ring oil outlet 124 through the multiple inter-winding outward oil circuits 1107, until the cooling medium is discharged from the housing outlet 1102. The iron core windings 130 are accommodated between every two adjacent inter-winding inward oil circuits 1105 and every two adjacent inter-winding outward oil circuits 1107, so that the direction of the cooling medium can cover all of the iron core windings and completely surround the outer periphery of each of the iron core windings 130. This design makes full use of space, effectively enhances cooling capacity, and thereby ensures the reliability of the stator.

With reference to FIG. 11, the multiple inter-winding inward oil circuits 1105 and the multiple inter-winding outward oil circuits 1107 are arranged and spaced apart in the circumferential direction. The number of the inter-winding inward oil circuits 1105 is obviously more than that of the inter-winding outward oil circuits 1107. The inter-winding inward oil circuits 1105 can be correspondingly communicated with the iron core outer ring oil gap 1104, and the inter-winding outward oil circuits 1107 can be correspondingly communicated with the spray ring oil outlet 124, that is, the spray ring oil spray circuit 1001 communicates with the inter-winding inward oil circuit 1105 through the iron core outer ring oil gap 1104, and the inter-winding outward oil circuit 1107 communicates with the housing outlet 1102 through the spray ring oil outlet 124.

With reference to FIG. 11, the multiple spray holes 121 are communicated between the spray ring oil spray circuit 1001 and the iron core outer ring oil gap 1104 and spaced apart in the circumferential direction, so that the cooling medium can be uniformly sprayed into the iron core outer ring oil gap 1104, and all of the iron core windings 130 can be emerged by the cooling medium, thereby improving the cooling capacity.

As shown in FIG. 11 and FIG. 2, the stator cooling structure 100 further includes:
a housing 110 including a enclosing plate 111, which includes an inner enclosing plate 111b and an outer enclosing plate 111a arranged in a radial direction, and the housing inlet 1101 and the housing outlet 1102 are arranged on the outer enclosing plate 111a;
a spray ring 120 connected to an inner side of the outer enclosing plate 111a to form a spray ring oil spray circuit 1001 between the spray ring 120 and the outer enclosing plate 111a, and the spray hole 121 and the spray ring oil outlet 124 are formed on the spray ring 120, and the spray ring oil outlet 124 right faces the housing outlet 1102;
multiple iron core windings 130, which are arranged and spaced apart in the circumferential direction and located between the inner enclosing plate 111b and the spray ring 120, and an inner ring oil circuit 1106 is formed between the iron core windings 130 and the inner enclosing plate 111b, an iron core outer ring oil gap 1104 is formed between the spray ring 120 and the corresponding iron core windings 130, an inter-winding inward oil circuit 1105 is formed between two iron core windings 130 facing and adjacent to the spray ring 120, and an inter-winding outward oil circuit 1107 is formed between two iron core windings 130 facing and adjacent to the spray ring oil outlet 124.

The spray ring 120 may be formed by splicing with the outer enclosing plate 111a, and a spray ring oil spray circuit 1001 is formed between the spray ring 120 and the outer enclosing plate 111a. The spray ring 120 and the outer enclosing plate 111a may be bonded by glue, while a stator cavity 1002 is formed between the spray ring 120 and the inner enclosing plate 111b, in which the inter-winding inward oil circuit 1105, the inter-winding outward oil circuit 1107, the iron core outer ring oil gap 1104, and the inner ring oil circuit 1106 are located.

The spray ring 120 and the housing 110 are cooperated to form the spray ring oil spray circuit 1001 for introducing cooling medium (including cooling oil or the like), and the cooling medium is sprayed on the iron core winding 130 in the stator cavity 1002 through the spray holes 121 on the spray ring 120 to achieve the cooling effect. Compared with the way of processing the interior of the housing in the conventional technology, only the spray ring 120 needs to be processed, which effectively reduces the processing difficulty and ensures the structural strength and supporting capacity of the housing 110.

In addition, it is necessary to keep a gap between the iron core winding 130 and the enclosing plate 111 to ensure insulation between them and avoid short circuit. In this case, the spray ring 120 may be made of insulating material, such as a plastic spray ring. By sandwiching the spray ring 120 between the iron core winding 130 and the enclosing plate 111, not only can the spray ring oil spray circuit 1001 be formed between the spray ring 120 and the enclosing plate 111, but also the insulation between the iron core winding 130 and the enclosing plate 111 can be ensured. In addition, a distance between the iron core winding 130 and the enclosing plate 111 can be shortened, thus allowing the radial size of the whole to be reduced, and ensuring the adaptability of the mounting environment.

As shown in FIG. 11 to FIG. 3, the outer enclosing plate 111a is provided with a housing inlet 1101 and a housing outlet 1102, and the housing inlet 1101 can communicate with the spray ring oil spray circuit 1001 and the housing outlet 1102 can communicate with the stator cavity 1002. In this way, the cooling medium is first introduced into the spray ring oil spray circuit 1001 through the housing inlet 1101 and then sprayed into the stator cavity 1002 through the spray holes 121 on the spray ring 120 to cool the iron core windings 130 in the stator cavity 1002, and the cooling medium after heat exchange in the stator cavity 1002 is discharged from the housing outlet 1102.

As shown in FIG. 11 and FIG. 3, the spray ring 120 is provided with a spray ring oil outlet 124. The spray ring oil outlet 124 and the spray ring oil spray circuit 1001 are arranged and spaced apart along the circumferential direction of the spray ring 120, and the spray ring oil outlet 124 right faces the housing outlet 1102. The housing outlet 1102 can communicate with the stator cavity 1002 through the spray ring oil outlet 124, that is, the cooling medium after heat exchange in the stator cavity 1002 flows from the spray ring oil outlet 124 to the housing outlet 1102 and is discharged from the housing outlet 1102, as shown in FIG. 11.

Further, the spray ring 120 is provided with two barrier members 123. The two barrier members 123 are arranged at two sides of the opening hole 122 in the circumferential direction respectively, separating from the spray ring oil spray circuit 1001. The barrier members 123 are sandwiched between the iron core winding 130 and the outer enclosing plate 111a, and one of the barrier members 123 is blocked between the housing inlet 1101 and the housing outlet 1102. This prevents the cooling medium introduced from the housing inlet 1101 from being directly discharged from the housing outlet 1102 clockwise, and prevents the cooling medium after heat exchange from being discharged from the housing inlet 1101.

As shown in FIG. 11, the cooling medium introduced from the housing inlet 1101 flows counterclockwise in the spray ring oil spray circuit 1001 under the blocking of the barrier member 123, and the cooling medium in the spray ring oil spray circuit 1001 is sprayed into the stator cavity 1002 through the multiple spray holes 121. The cooling medium can run between two adjacent iron core windings 130 and flow radially from outside to inside of the iron core windings 130 to converge, and run through the gaps between the opening 122 and the iron core 131, until it is discharged from the housing outlet 1102.

As shown in FIG. 11 and FIG. 2, the housing 110 further includes the inner enclosing plate 111b connected between the two bottom plates 112, and a center of the inner enclosing plate 111b is connected with a rotating shaft. When the cooling medium flows to the radial inner side of the iron core winding 130, it follows the outer periphery of the inner enclosing plate 111b until it runs through the gaps between the iron cores 131 facing the spray ring oil outlet 124.

With continued reference to FIG. 11, the circumferential size of the spray ring oil outlet 124 is approximately equal to the distance between the two barrier members 123. At present, each of the barrier members 123 abuts against one iron core winding 130, and one iron core winding 130 is arranged between two adjacent barrier members 123. Since the circumferential size of the opening 122 and the distance between the two barrier members 123 may define the size of the cooling medium discharge channel, the circumferential size of the opening 122 and the distance between the two barrier members 123 can be adjusted to vary the size of the cooling medium discharge channel, so as to regulate the flow resistance.

As shown in FIG. 11 and FIG. 3, the multiple spray holes 121 are distributed and spaced apart along the circumference of the spray ring 120, so that the cooling medium can be uniformly sprayed into the stator cavity 1002 from all circumferential directions, allowing each of the iron core windings 130 to be in contact with the cooling medium and thus ensuring the cooling effect.

With reference to FIG. 11, the spray hole 121 right faces the center of the iron core winding 130, so that the cooling medium sprayed from the spray hole 121 can be directly sprayed to the radial outer side of the iron core winding 130, and then runs between two adjacent iron core windings 130 and flows to the radial inner side of the iron core winding 130. In this way, the radial outer side of the iron core winding 130 may also be in contact with the cooling medium, and the outer periphery of each of the iron core windings 130 may be ensured to contact with the cooling medium, thus improving the cooling effect. When the spray ring 120 abuts against the iron core windings 130, the spray hole 121 may correspond to the gap between two iron core windings 130.

One iron core winding 130 is arranged between two adjacent spray holes 121, and the spray holes 121 are in a linear shape, which is not limited to this. By varying the size, shape and number of the spray holes 121, the oil output amount can be regulated to ensure the uniform cooling of the coils 132 of the iron core winding 130.

As shown in FIG. 3 and FIG. 4, the spray ring oil spray circuit 1001 includes at least one cooling groove 1001a. A side of the spray ring 120 connected with the outer enclosing plate 111a is recessed to form the cooling groove 1001a, and/or a side of the outer enclosing plate 111a connected with the spray ring 120 is recessed to form the cooling groove 1001a.

The cooling groove 1001a may only be formed on the spray ring 120, so that only the cooling groove 1001a needs to be machined, which reduces the machining difficulty and ensures the strength and supporting capacity of the housing 110. In this case, the spray hole 121 is located at a bottom of the cooling groove 1001a of the spray ring 120.

Certainly, the cooling groove 1001a may be formed on the outer enclosing plate 111a of the housing 110. Since only the inner side wall of the outer enclosing plate 111a needs to be processed, this is equivalent to reduce the processing difficulty, compared to processing the interior of the housing.

When the outer enclosing plate 111a and the spray ring 120 are respectively provided with cooling grooves 1001a, the volume of the cooling grooves 1001a is increased. In this case, the cooling grooves 1001a on the outer enclosing plate 111a and the spray ring 120 are arranged opposite and in communication to each other, and the spray holes 121 are located at the bottom of the cooling grooves 1001a of the spray ring 120.

As shown in FIG. 11 and FIG. 3, the circumferential size of the cooling groove 1001a is much larger than that of the spray ring oil outlet 124.

Since the cooling medium in the spray ring oil spray circuit 1001 needs to be sprayed into the stator cavity 1002 through the spray holes 121 on the spray ring 120, there is no high requirement for the sealing performance between the spray ring 120 and the outer enclosing plate 111a when they abuts against each other. Therefore, simply fixing both axial ends of the spray ring 120 directly to the two bottom plates 112 would meet the requirement. In order to ensure the strength of the spray ring 120, multiple reinforcing ribs may be arranged on the side of the spray ring 120 facing the iron core winding 130, so as to prevent the spray ring 120 from being deformed. The reinforcing ribs are staggered from the spray holes 121, and the reinforcing ribs abut on the iron core winding 130.

In summary, the cooling medium is introduced into the spray ring oil spray circuit 1001 from the housing inlet 1101 and then evenly sprayed into the iron core outer ring oil gap 1104 through the spray holes 121 distributed and spaced apart in the circumferential direction, and then flows into the inner ring oil spray circuit 1106 from the inter-winding inward oil circuit 1105. The cooling oil in the inner ring oil circuit 1106 flows to the spray ring oil outlet 124 through the inter-winding outward oil circuit 1107, until it is discharged from the housing outlet 1102. The iron core windings 130 are accommodated between two adjacent inter-winding inward oil circuits 1105 and two adjacent inter-winding outward oil circuits 1107, so that the cooling medium can run all over the iron core windings and completely surround the outer periphery of each of the iron core windings 130. This design makes full use of space, effectively enhances cooling capacity, and thereby ensures the reliability of the stator. The spray ring 120 and the housing 110 cooperate to form the spray ring oil spray circuit 1001 for introducing cooling medium, and the cooling medium is sprayed on the iron core winding 130 in the stator cavity 1002 through the spray holes 121 on the spray ring 120 to achieve the cooling effect. Compared with the way of processing the interior of the housing in the conventional technology, only the spray ring 120 needs to be processed, which effectively reduces the processing difficulty and ensures the structural strength and supporting capacity of the housing 110. The spray ring 120 may abut against the outer enclosing plate 111a, that is, the spray ring oil spray circuit 1001 may be formed at the radial outer side of the iron core winding 130. The spray ring 120 can be made of insulating material. By abutting the spray ring 120 between the iron core winding 130 and the enclosing plate 111, not only can the spray ring oil spray circuit 1001 be formed between the spray ring 120 and the enclosing plate 111, but also the insulation between the iron core winding 130 and the enclosing plate 111 can be ensured. Additionally, this design can shorten the distance between the iron core winding 130 and the enclosing plate 111, thereby reducing the overall radial size and ensuring adaptability to the mounting environment.

### Fourth embodiment

As shown in FIG. 12, the stator cooling structure 100 includes the housing inlet 1101, the spray ring oil spray circuit 1001, the inward oil circuit 1110, the outward oil circuit 1120, the spray ring oil inlet 125 and the housing outlet 1102;
the inward oil circuit 1110 is located at the radial outer side of the spray ring oil spray circuit 1001 and communicates with the spray ring oil spray circuit 1001 through the spray ring oil inlet 125, and the inward oil circuit 1110 includes multiple inter-winding inward oil gaps 1110b arranged and spaced apart in the circumferential direction;
the outward oil circuit 1120 is located at the radial outer side of the spray ring oil spray circuit 1001, and the outward oil circuit 1120 and the inward oil circuit 1110 are arranged and spaced apart in the circumferential direction, and the spray ring oil spray circuit 1001 communicates with the outward oil circuit 1120 through multiple spray holes 121, and the outward oil circuit 1120 includes multiple winding inner ring outward oil gaps 1120c arranged and spaced apart in the circumferential direction;
the housing inlet 1101 communicates with the inward oil circuit 1110, and the housing outlet 1102 communicates with the outward oil circuit 1120.

The cooling medium (including cooling oil) introduced from the housing inlet 1101 first enters the inward oil circuit 1110, flows into the spray ring oil spray circuit 1001 along with the inter-winding inward oil gaps 1110b and through the spray ring oil inlet 125, and then is sprayed into the outward oil circuit 1120 through the multiple circumferentially spaced spray holes 121, and then flows radially from inside to the outside along with the winding inner ring outward oil gaps 1120c, until it is collected at the housing outlet 1102 and discharged from the housing outlet 1102. The iron core windings 130 are arranged between two adjacent inter-winding inward oil gaps 1110b and between two adjacent winding inner ring outward oil gaps 1120c, so that the cooling medium may be sprayed evenly to all of the iron core windings 130, and the cooling medium can run all over the iron core windings and completely surround the outer periphery of each of the iron core winding 130. This design makes full use of space, effectively enhances cooling capacity, and thereby ensures the reliability of the stator.

With reference to FIG. 12, the inward oil circuit 1110 and the outward oil circuit 1120 are arranged and spaced apart in the circumferential direction, that is, they are not communicated with each other in the circumferential direction. This avoids a situation where these two are in communication with each other in the circumferential direction, which may cause the cooling medium cannot run all over the iron core windings 130.

The multiple spray holes 121 are communicated between the outward oil circuit 1120 and the spray ring oil spray circuit 1001 and spaced apart in the circumferential direction, so that the cooling medium can be uniformly sprayed to the iron core windings 130, and all of the iron core windings 130 can be emerged by the cooling medium, thereby improving the cooling capacity.

As shown in FIG. 12, the stator cooling structure 100 further includes:
the housing 110 having the enclosing plate 111 including an inner enclosing plate 111b and an outer enclosing plate 111a arranged in a radial direction, in which the housing inlet 1101 and the housing outlet 1102 are arranged on the outer enclosing plate 111a;
a spray ring 120 connected to the outer ring of the inner enclosing plate 111b to form the spray ring oil spray circuit 1001 between the spray ring 120 and the inner enclosing plate 111b, in which the spray hole 121 and the spray ring oil inlet 125 are opened on the spray ring 120;
multiple iron core windings 130, which are arranged and spaced apart in the circumferential direction and located between the outer enclosing plate 111a and the spray ring 120, in which the outer enclosing plate 111a and the spray ring 120 are separated by a barrier member 123 and form the inward oil circuit 1110 and the outward oil circuit 1120, the barrier member 123 passes between two adjacent iron core windings 130 and is sandwiched between the outer enclosing plate 111a and the spray ring 120, and one of the barrier members 123 is blocked between the housing inlet 1101 and the housing outlet 1102, the inter-winding inward oil gap 1110b is formed between two adjacent iron core windings 130 and is located in the inward oil circuit 1110, and the winding inner ring outward oil gap 1120c is formed between two adjacent iron core windings 130 and is located in the outward oil circuit 1120.

The spray ring 120 may be formed by splicing with the inner enclosing plate 111b, and the spray ring oil spray circuit 1001 is formed between them. The spray ring 120 and the inner enclosing plate 111b may be bonded by glue, and the stator cavity 1002 is formed between the spray ring 120 and the outer enclosing plate 111a, in which both the inward oil circuit 1110 and the outward oil circuit 1120 are located.

The spray ring 120 and the housing 110 cooperate to form the spray ring oil spray circuit 1001 for introducing cooling medium (including cooling oil or the like), and the cooling medium is sprayed on the iron core winding 130 in the stator cavity 1002 through the spray holes 121 on the spray ring 120 to achieve the cooling effect. Compared with the way of processing the interior of the housing in the conventional technology, only the spray ring 120 needs to be processed, which effectively reduces the processing difficulty and ensures the structural strength and supporting capacity of the housing 110.

In addition, it is necessary to keep a gap between the iron core winding 130 and the enclosing plate 111 to ensure insulation between them and avoid short circuit. In this case, the spray ring 120 may be made of insulating material, such as a plastic spray ring. By abutting the spray ring 120 between the iron core winding 130 and the enclosing plate 111, not only can the spray ring oil spray circuit 1001 be formed between the spray ring 120 and the enclosing plate 111, but also the insulation between the iron core winding 130 and the enclosing plate 111 can be ensured. In addition, a distance between the iron core winding 130 and the enclosing plate 111 can be shortened, thus allowing the radial size of the whole to be reduced, and ensuring the adaptability of the mounting environment.

As shown in FIG. 12, the inward oil circuit 1110 further includes a winding outer ring inward oil gap 1110a and a winding inner ring inward oil gap 1110c, and, the spray ring oil spray circuit 1001, the winding inner ring inward oil gap 1110c and the winding outer ring inward oil gap 1110a are arranged radially from inside to outside, multiple inter-winding inward oil gaps 1110b are communicated between the winding outer ring inward oil gap 1110a and the winding inner ring inward oil gap 1110c, the winding inner ring inward oil gap 1110c is communicated with the spray ring oil spray circuit 1001 through the spray ring oil inlet 125, and the housing inlet 1101 is communicated with the winding outer ring inward oil gap 1110a;
the outward oil circuit 1120 further includes a winding outer ring outward oil gap 1120a and a winding inner ring outward oil gap 1120c, and, the spray ring oil spray circuit 1001, the winding inner ring outward oil gap 1120c and the winding outer ring outward oil gap 1120a are arranged from inside to outside in the radial direction, multiple inter-winding outward oil gaps 1120b are communicated between the winding inner ring outward oil gap 1120c and the winding outer ring outward oil gap 1120a, the spray ring oil spray circuit 1001 is communicated with the winding inner ring outward oil gap 1120c through the spray hole 121, and the winding outer ring outward oil gap 1120c is communicated with the housing outlet 1102.

In the inward oil circuit 1110, the winding outer ring inward oil gap 1110a is formed between the iron core winding 130 and the outer enclosing plate 111a, and the winding inner ring inward oil gap 1110c is formed between the iron core winding 130 and the spray ring 120.

In the outward oil circuit 1120, the winding outer ring outward oil gap 1120a is formed between the iron core winding 130 and the outer enclosing plate 111a, and the winding inner ring outward oil gap 1120c is formed between the iron core winding 130 and the spray ring 120.

The cooling medium introduced from the housing inlet 1101 first flows into the winding outer ring inward oil gap 1110a, then flows to the winding inner ring inward oil gap 1110c along with the inter-winding inward oil gaps 1110b, and then flows into the spray ring oil spray circuit 1001 through the spray ring oil inlet 125. The spray ring oil spray circuit 1001 is uniformly injected into the winding inner ring outward oil gap 1120c through multiple spray holes 121, and then flows into the winding outer ring outward oil gap 1120a along with the inter-winding outward oil gaps 1120b, and finally the cooling medium is collected at the housing outlet 1102 and discharged from the housing outlet 1102.

With reference to FIG. 12, the two barrier members 123 are connected between the spray ring 120 and the outer enclosing plate 111a. The barrier members 123 are located between two adjacent iron core windings 130. The spray ring oil inlet 125 and the housing inlet 1101 are respectively located between the two barrier members 123, and one of the barrier members 123 is blocked between the housing inlet 1101 and the housing outlet 1102.

In this way, the cooling medium introduced from the housing inlet 1101 first runs between the two barrier members 123, and flows into the spray ring oil spray circuit 1001 from the spray ring oil inlet 125, and then is sprayed from the spray holes 121 on the spray ring 120 to the iron core winding 130 located in the stator cavity 1002, and finally is discharged from the housing outlet 1102. One of the barrier members 123 is blocked between the housing inlet 1101 and the housing outlet 1102, so as to prevent the cooling medium introduced from the housing inlet 1101 from being directly discharged from the housing outlet 1102, instead of first entering the spray ring oil spray circuit 1001 and then being sprayed into the stator cavity 1002 through the spray holes 121. This ensures that the cooling medium can be uniformly sprayed to each of the iron core windings 130, thus improving the cooling effect.

As shown in FIG. 12, FIG. 7 and FIG. 8, the spray ring oil spray circuit 1001 includes the at least one cooling groove 1001a. A side of the spray ring 120 connected with the inner enclosing plate 111b is recessed to form the cooling groove 1001a, and/or a side of the inner enclosing plate 111b connected with the spray ring 120 is recessed to form the cooling groove 1001a.

As shown in FIG. 12 and FIG. 8, a flow diverter 111b1 is arranged on the outer side of the inner enclosing plate 111b, and the flow diverter 111b1 right faces the spray ring oil inlet 125. The flow diverter 111b1 may be triangular in shape, with its vertex angle directly facing the spray ring oil inlet 125, so that the cooling medium introduced from the opening 122 is divided by the flow diverter 111b1 and flows into the spray ring oil spray circuit 1001 from both sides of the flow diverter 111b1, ensuring that the spray holes 121 can uniformly spray the cooling medium.

With reference to FIG. 12, the circumferential size of the opening 122 is approximately equal to the distance between the two barrier members 123. At present, three iron core windings 130 are arranged between the two adjacent barrier members 123. The circumferential size of the opening 122 and the distance between the two barrier members 123 may define the size of the cooling medium introduction channel, so the circumferential size of the opening 122 and the distance between the two barrier members 123 can be adjusted to adjust the size of the cooling medium introduction channel to regulate the flow resistance.

With continued reference to FIG. 12, multiple spray holes 121 are arranged and spaced apart along the circumference of the spray ring 120, so that the cooling medium can be uniformly sprayed into the stator cavity 1002 from all circumferential angles, allowing each of the iron core windings 130 to be in contact with the cooling medium and thus ensure the cooling effect.

The spray hole 121 right faces the center of the iron core winding 130, so that the cooling medium sprayed from the spray hole 121 can be directly sprayed to the radial inner side of the iron core winding 130, and then runs between two adjacent iron core windings 130 and flows to the radial outer side of the iron core winding 130. In this way, the radial inner side and the radial outer side of the iron core winding 130 are both in contact with the cooling medium, and the outer periphery of each of the iron core windings 130 may be ensured to be in contact with the cooling medium, thereby improving the cooling effect.

One iron core winding 130 is arranged between two adjacent spray holes 121, and the spray holes 121 are arranged in an oblique line, as show in FIG. 12, which is not limited to this. By adjusting the size, shape and number of the spray holes 121, the oil output amount can be regulated to ensure the uniform cooling of the coils 132 of the iron core winding 130.

As shown in FIG. 12, when the cooling medium runs between two adjacent iron core windings 130 and flows to the radial outer side, the cooling medium is discharged from the housing outlet 1102 in the circumferential direction. Since two barrier members 123 are arranged in the stator cavity 1002, the cooling medium below the barrier members 123 needs to move clockwise until it is discharged from the housing outlet 1102. The cooling medium is remained in contact with each of the iron core windings 130 during its flow, which greatly reduces the heat exchange effect. To address this, the collecting groove 1103 is formed on the axial end face of the outer enclosing plate 111a, so as to directly lead the cooling medium below the barrier member 123 to the housing outlet 1102 and directly discharge it from the housing outlet 1102. This avoids the cooling medium that has already exchanged heat from being remained in contact with the iron core winding 130 and affecting the cooling effect.

Specifically, at least one axial end face of the outer enclosing plate 111a is provided with a collecting groove 1103, which is arranged along the circumferential direction of the outer enclosing plate 111a. The both ends of the collecting groove 1103 are located outside the two barrier members 123 and communicate with the stator cavity 1002, as shown in FIG. 9 and FIG. 12. The collecting groove 1103 and the outward oil circuit 1120 are arranged circumferentially and are connected end-to-end in a sequential manner.

By opening the collecting grooves 1103 on both axial end faces of the outer enclosing plate 111a, the fluidity is increased, and the discharge efficiency of the cooling medium after heat exchange is further improved.

In summary, the cooling medium introduced from the housing inlet 1101 first enters the inward oil circuit 1110, flows into the spray ring oil spray circuit 1001 along with the inter-winding inward oil gaps 1110b and through the spray ring oil inlet 125, and then is sprayed into the outward oil circuit 1120 through the multiple circumferentially spaced spray holes 121, and then flows radially from inside to outside along with the inter-winding outward oil gaps 1120c, until it is collected at the housing outlet 1102 and discharged from the housing outlet 1102. The iron core windings 130 are arranged between two adjacent inter-winding inward oil gaps 1110b and between two adjacent inter-winding outward oil gaps 1120c, so that the cooling medium may be sprayed evenly to all of the iron core windings 130, and the running of the cooling medium can involve all of the iron core windings and completely surround the outer periphery of each of the iron core winding 130. This design makes full use of space, effectively enhances cooling capacity, and thereby ensures the reliability of the stator. The spray ring 120 and the housing 110 cooperate to form the spray ring oil spray circuit 1001 for introducing cooling medium, and the cooling medium is sprayed on the iron core winding 130 in the stator cavity 1002 through the spray holes 121 on the spray ring 120 to achieve the cooling effect. Compared with the way of processing the interior of the housing in the conventional technology, only the spray ring 120 needs to be processed, which effectively reduces the processing difficulty and ensures the structural strength and supporting capacity of the housing 110. The spray ring 120 may abut against the inner enclosing plate 111b, that is, the spray ring oil spray circuit 1001 may be formed at the radial inner side of the iron core winding 130. The spray ring 120 can be made of insulating material. By sandwiching the spray ring 120 between the iron core winding 130 and the enclosing plate 111, not only can the spray ring oil spray circuit 1001 be formed between the spray ring 120 and the enclosing plate 111, but also the insulation between the iron core winding 130 and the enclosing plate 111 can be ensured. Additionally, this design can shorten the distance between the iron core winding 130 and the enclosing plate 111, thereby reducing the overall radial size and ensuring adaptability to the mounting environment.

### Fifth embodiment

An axial flux motor is further provided according to the present application, which includes the stator cooling structure 100 of any one of the aforementioned embodiments, and further includes two rotors, and the two rotors are respectively held at both axial sides of the stator cooling structure 100 with air gaps, and in this case, the axial flux motor is a single-stator and dual-rotor axial flux motor.

As the axial flux motor adopts the stator cooling structure 100 of the above embodiment, the beneficial effects of the axial flux motor may refer to the stator cooling structure 100.

### Fourth embodiment

As shown in FIG. 1 and FIG. 5, a method for manufacturing the stator cooling structure is used for manufacturing the stator cooling structure 100 of any one of the aforementioned embodiments, and includes the following steps:
S1: providing a spray ring 120 having multiple spray holes 121;
S2: splicing the spray ring 120 on a enclosing plate 111 to form a spray ring oil spray circuit 1001 between the spray ring 120 and the spliced enclosing plate 111, and forming a stator cavity 1002 between the spray ring 120 and another enclosing plate 111;
S3: arranging multiple iron core windings 130 in the stator cavity 1002 and spacing the multiple iron core windings 130 in the stator cavity 1002 apart in the circumferential direction.

The spray ring oil spray circuit 1001 is formed by splicing the spray ring 120 and the enclosing plate 111, eliminating the need for extensive processing of the housing 110. The main processing can simply focus on the spray ring 120, such as opening the cooling groove 1001a, the spray hole 121 and the opening 122, etc., as shown in FIG. 3 and FIG. 7. In this way, the processing difficulty can be reduced while the support strength of the housing 110 is ensured.

The spray ring 120 may be made of insulating material, which can shorten the distance between the iron core winding 130 and the enclosing plate 111, and at the same time ensure the insulation between them, thereby reducing the overall radial size.

In step S2, the spray ring 120 and the enclosing plate 111 may be bonded by glue. The enclosing plate 111 may include an outer enclosing plate 111a and an inn enclosing plate 111b, that is, the spray ring 120 may be respectively fitted with the outer enclosing plate 111a and the inn enclosing plate 111b to form a spray ring oil spray circuit 1001 located radially inside or outside, as shown in FIG. 1 and FIG. 5.

With reference to FIG. 10, the method for manufacturing the stator cooling structure further includes:
providing two bottom plates 112, first, the two enclosing plates 111a and 111b, the spray ring 120 and multiple iron core windings 130 are fixed on one of the bottom plates 112, as shown in FIG. 2 and FIG. 6, then, the other of the bottom plates 112 is fixed on the other side of the enclosing plates 111, the spray ring 120 and the iron core windings 130, and, the enclosing plates 111, the spray ring 120 and the iron core windings 130 are connected between the two bottom plates 112. The enclosing plate 111 and the two bottom plates 112 may be fixed by bolts, the spray ring 120 may be fixed between the two bottom plates 112 by glue, and the iron core winding 130 may be positioned by the positioning slot 112a on the bottom plates 112 and may also be strengthened and fixed by glue.

The above-mentioned embodiments are only used to illustrate the technical ideas and characteristics of the present application, and their purpose is to enable the skilled in the art to understand the contents of the present application and implement it accordingly. It is not possible to limit the patent application scope of the present application only by this embodiment, that is, all equivalent changes or modifications made according to the spirit disclosed in the present application still fall within the patent scope of the present application.

## Claims

1. A stator cooling structure (100), comprising:
a housing (110), which comprises two enclosing plates (111) arranged in a radial direction;
at least one spray ring (120), wherein the spray ring (120) is located between two enclosing plates (111) and is connected with one enclosing plate (111), a spray ring oil spray circuit (1001) is formed between the spray ring (120) and the enclosing plate (111), a stator cavity (1002) is formed between the spray ring (120) and the other enclosing plate (111), and a plurality of spray holes (121) are formed in the spray ring (120), which communicate the stator cavity (1002) and the spray ring oil spray circuit (1001);
a plurality of iron core windings (130) fixed in the stator cavity (1002) and spaced apart along a circumferential direction; and
a splicing gap formed at a joint of the spray ring (120) and the enclosing plate (111).

2. The stator cooling structure (100) according to claim 1, wherein the two enclosing plates (111) comprise an inner enclosing plate (111b) and an outer enclosing plate (111a), and the outer enclosing plate (111a) has a housing inlet (1101) and a housing outlet (1102).

3. The stator cooling structure (100) according to claim 2, wherein a spray ring oil spray circuit (1001) is formed between the spray ring (120) and the outer enclosing plate (111a), and the spray ring oil spray circuit (1001) is communicated with the housing inlet (1101);
an iron core outer ring oil gap (1104) is formed between the spray ring (120) and the iron core winding (130), and the spray hole (121) is communicated with the iron core outer ring oil gap (1104) and the spray ring oil spray circuit (1001);
an inner ring oil circuit (1106) is formed between the iron core winding (130) and the inner enclosing plate (111b);
an inter-winding inward oil circuit (1105) is formed between two iron core windings (130) facing and adjacent to the spray ring (120), and the inter-winding inward oil circuit (1105) communicates the iron core outer ring oil gap (1104) and the inner ring oil circuit (1106);
the spray ring (120) has the spray ring oil outlet (124), the spray ring oil outlet (124) right faces and communicates with the housing outlet (1102), and the spray ring oil outlet (124) and the iron core outer ring oil gap (1104) are arranged and spaced apart along the circumferential direction; and
an inter-winding outward oil circuit (1107) is formed between two iron core windings (130) facing and adjacent to the spray ring oil outlet (124), and the inter-winding outward oil circuit (1107) communicates the spray ring oil outlet (124) and the inner ring oil circuit (1106).

4. The stator cooling structure (100) according to claim 3, wherein the spray ring oil outlet (124) and the spray ring oil spray circuit (1001) are blocked by a plurality of barrier member (123), which are sandwiched between the iron core winding (130) and the outer enclosing plate (111a), and one of the barrier members (123) is blocked between the housing inlet (1101) and the housing outlet (1102).

5. The stator cooling structure (100) according to claim 2, wherein the spray ring (120) is connected to an outer ring of the inner enclosing plate (111b) to form the spray ring oil spray circuit (1001) between the spray ring (120) and the inner enclosing plate (111b);
the outer enclosing plate (111a) and the spray ring (120) are separated from each other by a barrier member (123) and form an inward oil circuit (1110) and an outward oil circuit (1120) arranged and spaced apart in the circumferential direction, wherein the housing inlet (1101) is communicated with the inward oil circuit (1110), and the housing outlet (1102) is communicated with the outward oil circuit (1120);
the spray ring (120) has a spray ring oil inlet (125), the inward oil circuit (1110) is communicated with the spray ring oil spray circuit (1001) through the spray ring oil inlet (125), and an inter-winding inward oil gap (1110b) is formed between two adjacent iron core windings (130) and is located in the inward oil circuit (1110); and
the spray ring oil spray circuit (1001) is communicated with the outward oil circuit (1120) through a plurality of spray holes (121), and a winding inner ring outward oil gap (1120c) is formed between two adjacent iron core windings (130) and is located in the outward oil circuit (1120).

6. The stator cooling structure (100) according to claim 5, wherein the inward oil circuit (1110) further comprises a winding outer ring inward oil gap (1110a) and a winding inner ring inward oil gap (1110c), wherein the spray ring oil spray circuit (1001), the winding inner ring inward oil gap (1110c) and the winding outer ring inward oil gap (1110a) are arranged radially from inside to outside, a plurality of inter-winding inward oil gaps (1110b) are communicated between the winding outer ring inward oil gap (1110a) and the winding inner ring inward oil gap (1110c), the winding inner ring inward oil gap (1110c) is communicated with the spray ring oil spray circuit (1001) through the spray ring oil inlet (125), and the housing inlet (110c) communicates with the winding outer ring inward oil gap (1110a); and
the outward oil circuit (1120) further comprises a winding outer ring outward oil gap (1120a) and a winding inner ring outward oil gap (1120c), wherein the spray ring oil spray circuit (1001), the winding inner ring outward oil gap (1120c) and the winding outer ring outward oil gap (1120a) are arranged radially from inside to outside, a plurality of inter-winding outward oil gaps (1120b) are communicated between the winding inner ring outward oil gap (1120c) and the winding outer ring outward oil gap (1120a), the spray ring oil spray circuit (1001) is communicated with the winding inner ring outward oil gap (1120c) through the plurality of spray holes (121), and the winding outer ring outward oil gap (1120a) is communicated with the housing outlet (1102).

7. The stator cooling structure (100) according to claim 6, further comprising a collecting groove (1103), wherein the collecting groove (1103) and the outward oil circuit (1120) are arranged in the circumferential direction and communicated end to end sequentially, and at least one axial end face of the outer enclosing plate (111a) is provided with the collecting groove (1103).

8. The stator cooling structure (100) according to claim 6, wherein the outer ring of the inner enclosing plate (111b) is provided with a flow diverter (111b1), and the flow diverter (111b1) right faces the spray ring oil inlet (125).

9. The stator cooling structure (100) according to claim 1, wherein the splicing gap is filled with glue.

10. The stator cooling structure (100) according to any one of claims 1, 3 and 5, wherein the spray ring oil spray circuit (1001) comprises at least one cooling groove (1001a), and a side of the spray ring (120) connected with the enclosing plate (111) is recessed to form the cooling groove (1001a), and/or a side of the enclosing plate (111) connected with the spray ring (120) is recessed to form the cooling groove (1001a).

11. The stator cooling structure (100) according to claim 1, wherein the housing (110) comprises two bottom plates (112), the enclosing plate (111) and axial ends of the iron core winding (130) are respectively connected between the two bottom plates (112), and the spray ring (120) is fixed between the two bottom plates (112).

12. The stator cooling structure (100) according to claim 11, wherein the iron core winding (130) comprises an iron core (131) and a coil (132), the bottom plate (112) is provided with a plurality of positioning slots (112a), and the positioning slots (112a) on the two bottom plates (112) are in one-to-one correspondence, the iron cores (131) are inserted into the corresponding positioning slots (112a) on the two bottom plates (112), and the coil (132) mounted outside the outer periphery of the iron core (131) is sandwiched between the two bottom plates (112).

13. The stator cooling structure (100) according to claim 1, wherein the spray ring (120) is made of insulating material, the enclosing plate (111) is made of high-strength non-metal or high-strength metal material, and the bottom plate (112) is made of non-metal material.

14. An axial flux motor, comprising a stator cooling structure (100) according to any one of claims 1 to 13, and further comprising two rotors, wherein the two rotors are respectively held at both axial sides of the stator cooling structure (100) with air gaps.

15. A method for manufacturing a stator cooling structure, comprising the following steps:
providing a spray ring (120), wherein the spray ring (120) has a plurality of spray holes (121);
splicing the spray ring (120) on a enclosing plate (111) to form a spray ring oil spray circuit (1001) between the spray ring (120) and the spliced enclosing plate (111), and forming a stator cavity (1002) between the spray ring (120) and another enclosing plate (111); and
arranging a plurality of iron core windings (130) in the stator cavity (1002) spaced apart in the circumferential direction.
